(19) Europäisches Patentamt
European Patent Office
Office européen des brevets

(11) **EP 2 484 253 B1**

## (12) FASCICULE DE BREVET EUROPEEN

(45) Date de publication et mention de la délivrance du brevet:
**18.06.2014 Bulletin 2014/25**

(51) Int Cl.:
***A47J 43/046*** (2006.01)     ***A47J 43/08*** (2006.01)

(21) Numéro de dépôt: **12305124.5**

(22) Date de dépôt: **02.02.2012**

(54) **Appareil de préparation culinaire comportant une détection de balourd**

Apparat zur Essenszubereitung, der über eine Unwuchterkennung verfügt

Cooking appliance comprising an unbalance detector

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2011 FR 1150886**

(43) Date de publication de la demande:
**08.08.2012 Bulletin 2012/32**

(73) Titulaire: **SEB S.A.**
**69130 Ecully (FR)**

(72) Inventeur: **Leterrier, Thomas**
**50000 Saint-Lô (FR)**

(74) Mandataire: **Bourrières, Patrice et al**
**SEB Développement SAS**
**Service Propriete Industrielle**
**Les 4 M - Chemin du Petit Bois**
**B.P. 172**
**69134 Ecully Cedex (FR)**

(56) Documents cités:
**EP-A2- 1 650 850**

## Description

La présente invention concerne le domaine technique des appareils électroménagers de préparation culinaire comprenant un châssis supportant un récipient de travail à l'intérieur duquel est disposé un outil de travail entraîné en rotation par un moteur électrique solidaire du châssis.

De tels appareils électroménagers sont généralement conçus pour que le récipient et l'outil soient démontables pour permettre leur nettoyage et éventuellement leur remplacement en fonction des préparations culinaires envisagées.

De manière connue, un appareil électroménager du type ci-dessus peut être utilisé pour la préparation de pâte à pain. Dans le cadre d'une telle utilisation, l'outil peut alors être amené à malaxer dans le récipient de travail une quantité relativement importante d'ingrédients représentant un poids total de quelques kilos. Or, après un certain temps de malaxage, la pâte en cours de préparation est susceptible de s'agglomérer sur l'outil en une masse inégalement répartie qui peut éventuellement être projetée violemment par effet centrifuge contre la paroi périphérique du récipient de travail. Ces phénomènes d'agglomération et de projection, créant un balourd au niveau de l'outil de travail, sont alors susceptibles d'entraîner des mouvements et déplacements de l'appareil électroménager sur la surface sur laquelle il repose voire de déséquilibrer l'appareil électroménager jusqu'à entraîner un basculement ou une chute de ce dernier.

Il est donc apparu le besoin de disposer d'un appareil électroménager qui puisse être utilisé pour la préparation de diverses préparations culinaires et notamment de pâtes telles que la pâte à pain tout en étant susceptible de réduire autant que faire se peut les risques liés à l'apparition d'un balourd au niveau de l'outil de travail.

Afin d'atteindre cet objectif, une demande de brevet européen EP 1 650 850 a proposé un appareil électroménager de préparation culinaire comprenant : un châssis, un récipient de travail adapté sur le châssis, un outil de travail rotatif disposé dans le récipient de travail, un moteur électrique solidaire du châssis entraînant en rotation l'outil de travail, ainsi que des moyens de commande du moteur électrique. Selon cette demande de brevet, l'appareil comprend, en outre, des moyens de détection de l'apparition d'un balourd au niveau de l'outil de travail dans le récipient de travail pendant le fonctionnement du moteur électrique qui mettent en oeuvre des capteurs piézo-électriques associés à une unité de calcul pour émettre un signal d'apparition de balourd en fonction de l'évolution des efforts mesurés au niveau des capteurs pendant le fonctionnement du moteur électrique.

La mise en oeuvre de moyens de détection de l'apparition d'un balourd au niveau de l'outil de travail permet de détecter au plus tôt l'apparition d'un balourd le plus souvent avant même que ce dernier n'ait eu sur l'appareil électroménager un effet visible pour son utilisateur.

Toutefois, si la mise en oeuvre de capteurs piézo-électriques permet effectivement une détection de l'apparition d'un balourd, elle présente néanmoins l'inconvénient d'être relativement onéreuse en raison du coût des capteurs et de la nécessité d'en effectuer un étalonnage fin. De plus, la mesure effectuée par les capteurs peut être affectée par des paramètres extérieurs indépendants du risque d'apparition de balourd comme par exemple une pression exercée par un utilisateur sur le châssis de l'appareil.

Il est donc apparu le besoin de disposer d'un appareil dont le système de détection de balourd soit moins onéreux que les capteurs piézo-électriques, moins sensible à des influences extérieures et plus facile à mettre en oeuvre.

Afin d'atteindre cet objectif, l'invention concerne un appareil électroménager de préparation culinaire comprenant :

- un châssis,
- un récipient de travail adapté sur le châssis,
- un outil de travail rotatif disposé dans le récipient de travail,
- un moteur électrique solidaire du châssis entraînant en rotation l'outil de travail,
- des moyens de commande du moteur électrique,
- des moyens de détection de l'apparition d'un balourd au niveau de l'outil de travail dans le récipient de travail pendant le fonctionnement du moteur électrique, les moyens de détection étant adaptés pour émettre un signal en cas d'apparition d'un balourd.

Selon l'invention, les moyens de détection de l'apparition d'un balourd comprennent au moins un accéléromètre adapté pour mesurer une accélération du châssis selon au moins une direction de mesure, et sont adaptés pour émettre un signal d'apparition de balourd en fonction de l'accélération mesurée. La mise en oeuvre d'un accéléromètre permet de détecter l'apparition d'un balourd de manière moins onéreuse que par la mise en oeuvre de jauges piézo-électriques dans la mesure où l'accéléromètre peut-être placé en un seul point du châssis et notamment au niveau d'une carte électronique. Ainsi, il n'est pas nécessaire de disposer plusieurs capteurs en des points différents du châssis ce qui permet de réduire les coûts liés au montage et au raccordement aux moyens de commande.

Selon une forme de réalisation de l'invention visant à optimiser la détection de l'apparition du balourd, l'accéléromètre est adapté pour mesurer une accélération des mouvements du châssis selon au moins deux directions de mesure. Selon l'invention, l'accéléromètre pourra être adapté pour réaliser une mesure de l'accélération selon trois directions orthogonales les unes aux autres. L'accéléromètre pourra alors être disposé de manière qu'une des directions soit parallèle à l'axe de rotation de l'outil tandis que les deux autres directions lui seront orthogonales.

Selon une première variante de cette forme de réalisation, les moyens de détection sont adaptés pour calculer un paramètre d'accélération en fonction des valeurs de l'accélération dans certaines au moins des directions de mesure et pour émettre un signal d'apparition de balourd en fonction de la variation du paramètre d'accélération. La mise en oeuvre d'un tel paramètre d'accélération permet d'éviter une surveillance individuelle de l'accélération mesurée dans chaque direction en réalisant une synthèse des accélérations mesurées.

Selon une caractéristique de cette première variante, le paramètre d'accélération correspond à la somme de la valeur absolue des mesures d'accélération selon au moins deux directions.

Selon une autre caractéristique de cette variante, les moyens de détection de l'apparition d'un balourd sont adaptés pour émettre un signal d'apparition de balourd lorsque le paramètre d'accélération dépasse une valeur prédéterminée plusieurs fois sur un intervalle de temps glissant d'une durée prédéterminée.

Selon une autre caractéristique de cette variante, les moyens de détection de l'apparition d'un balourd sont adaptés pour calculer une moyenne du paramètre d'accélération sur un intervalle de temps glissant et pour émettre un signal d'apparition de balourd lorsque la moyenne du paramètre d'accélération est supérieure à une valeur prédéterminée. Pour les deux caractéristiques précédentes la valeur prédéterminée pourra par exemple correspondre à 2g où g est la valeur de l'accélération de la pesanteur terrestre correspondant à 9,81 m/s$^2$.

Selon une deuxième variante de cette forme de réalisation, les moyens de détection sont adaptés pour émettre un signal d'apparition de balourd au moins en fonction :

- d'une première valeur de l'accélération mesurée dans une direction
- et d'une deuxième valeur de l'accélération mesurée dans une autre direction.

Selon une caractéristique de cette deuxième variante de réalisation, les directions de mesure sont orthogonales à la direction de rotation de l'outil de travail. Cette caractéristique permet d'obtenir une bonne sensibilité de la détection de l'apparition d'un balourd dans le cadre d'une utilisation de l'appareil selon l'invention pour le pétrissage de pâte tout en réduisant la sensibilité du système de détection de balourd aux variations de l'accélération induites par d'autres utilisations comme par exemple l'utilisation de l'appareil selon l'invention pour les opérations de tranchage d'aliments.

Selon une caractéristique de cette deuxième variante de réalisation, les moyens de détection de l'apparition d'un balourd sont adaptés pour :

- calculer une première moyenne sur un intervalle de temps glissant de la valeur de l'accélération mesurée selon une direction,
- calculer une deuxième moyenne sur un intervalle de temps glissant de la valeur de l'accélération mesurée selon une autre direction,
- et pour émettre un signal d'apparition de balourd lorsque la première moyenne est supérieure à un premier seuil prédéterminé et/ou lorsque la deuxième moyenne est supérieure à un deuxième seuil prédéterminé.

Ainsi, dans le cadre de cette caractéristique les premier et deuxième seuils prédéterminés pourront être chacun supérieur ou égal à 0,5 g.

Toujours dans le cadre de cette caractéristique, l'un des seuils prédéterminés pourra être supérieur ou égal à deux fois l'autre seuil prédéterminé.

Selon une caractéristique de l'invention, les moyens de détection sont reliés aux moyens de commande qui sont adaptés pour modifier le mode de fonctionnement du moteur électrique en fonction du signal émis par les moyens de détection.

Selon une autre caractéristique de l'invention, les moyens de commande sont adaptés pour permettre une sélection d'au moins deux vitesses ou modes de fonctionnement du moteur. Les moyens de détection sont alors adaptés pour émettre un signal d'apparition de balourd en fonction de la vitesse ou du mode de fonctionnement sélectionné.

Selon encore une autre caractéristique de l'invention, les moyens de commande sont adaptés pour :

- permettre la sélection d'au moins deux vitesses de fonctionnement du moteur dont la plus faible est dite vitesse basse,
- lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

Avantageusement, les moyens de commande sont adaptés pour interrompre le fonctionnement du moteur lors de la réception d'un signal d'apparition de balourd.

Selon une caractéristique de l'invention, l'appareil électroménager comprend un organe de commande qui est mobile entre une position de repos et une position active et qui est asservi en position de repos, et les moyens de commande sont adaptés pour, lorsque l'organe de commande est en position active, faire fonctionner le moteur sans tenir compte d'un éventuel signal d'apparition de balourd et/ou en neutralisant les moyens de détection.

Selon l'invention, l'appareil électroménager peut également comprendre des moyens de neutralisation des moyens de détection de l'apparition de balourd.

Bien entendu, les différentes caractéristiques de l'invention évoquées ci-dessus peuvent être mises en oeuvre les unes avec les autres selon différentes combinaisons lorsqu'elles ne sont pas exclusives les unes des autres ou incompatibles.

Par ailleurs, diverses autres caractéristiques de l'invention ressortent de la description faite ci-dessous en référence à l'unique figure annexée qui montre, à titre d'exemple non limitatif, une forme de réalisation de l'objet de l'invention.

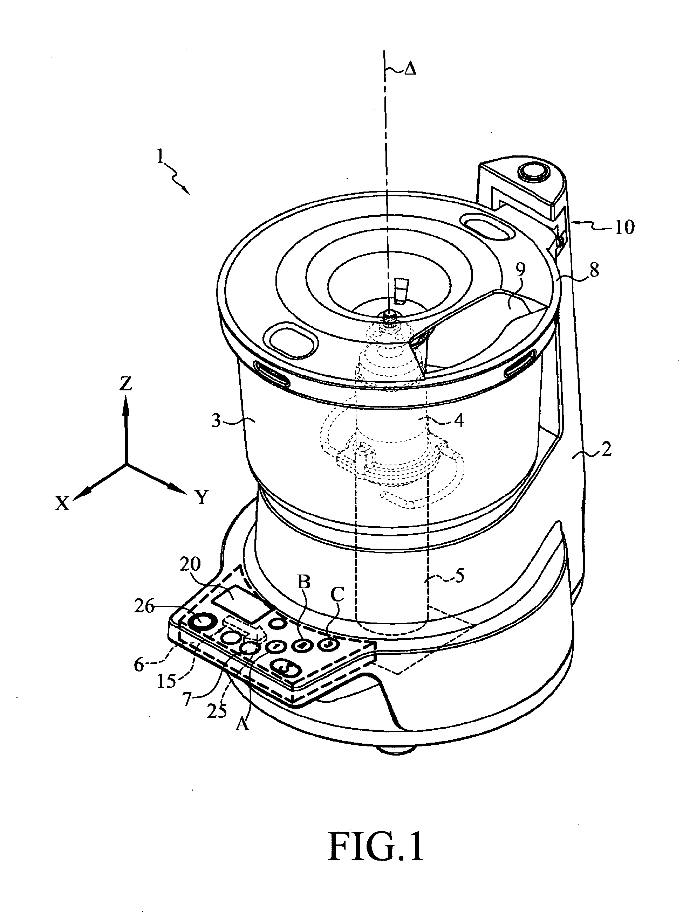

La fig. 1 est une perspective d'une forme de réalisation d'un appareil électroménager de préparation culinaire selon l'invention.

Un appareil électroménager de préparation culinaire tel qu'illustré à la figure 1 et désigné dans son ensemble par la référence 1 comprend un châssis 2 sur lequel est adapté un récipient 3 de travail de préférence amovible. De manière connue, le récipient 3 présente un orifice central non représenté pour le passage d'un arbre également non représenté de fixation d'un outil 4 de travail disposé à l'intérieur du récipient 3. L'appareil électroménager comprend alors, comme le montre la figure 1, un moteur 5 électrique solidaire du châssis 2 et adapté pour entraîner en rotation l'outil 4 de travail à l'intérieur du récipient 3.

Afin d'assurer le pilotage du moteur 5, l'appareil électroménager 1 comprend en outre des moyens de commande 6 associés à différentes touches 7 permettant de sélectionner des modes de fonctionnement et/ou des vitesses de fonctionnement du moteur électrique 5. Selon l'exemple illustré, les moyens de commande 6 comprennent trois touches A,B,C permettant de sélectionner trois vitesses croissantes du moteur dont la plus basse sélectionnée à l'aide de la touche A correspond à une vitesse adaptée pour le pétrissage.

L'appareil électroménager 1 comprend également un couvercle 8 pourvu d'une fenêtre 9 d'introduction d'ingrédients culinaires dans le récipient 3. Le couvercle 8 est adapté de manière amovible sur le récipient 3 de travail et se trouve associé à des moyens de sécurité 10 neutralisant le fonctionnement du moteur 5 électrique en cas d'absence du couvercle 8.

L'appareil électroménager 1 ainsi constitué est particulièrement adapté pour des préparations culinaires du type pâte à pain ou pâte à tarte. Or, dans certaines conditions, après un temps excessif de malaxage à la vitesse A de pétrissage, la pâte à pain s'échauffe et prend une consistance visqueuse de sorte qu'elle s'agglomère de manière irrégulière autour de l'outil 4 de travail créant alors un balourd. La rotation de l'outil 4 de travail portant ce balourd engendre des oscillations qui déséquilibrent l'appareil électroménager 1 au point de le déplacer sur le plan de travail sur lequel il repose, voire de le faire basculer.

Un tel phénomène de balourd apparaît également, et de façon encore plus rapide, lorsque l'utilisateur effectue le pétrissage de la pâte à une vitesse excessive, par exemple sur les vitesses B ou C.

Afin d'éviter un tel fonctionnement de l'appareil électroménager pouvant être dangereux pour son utilisateur, l'invention préconise de mettre en oeuvre des moyens 15 de détection de balourd.

Selon l'invention, la détection de l'apparition d'un balourd est réalisée en mesurant l'accélération des mouvements du châssis 2 induit par le fonctionnement du moteur et la rotation de l'outil 4 avec les aliments qui sont à son contact.

À cet effet, les moyens de détection 15 comprennent un accéléromètre 25 raccordé au moyen de détection de balourd de manière à mesurer à intervalles réguliers l'accélération du châssis 2 selon au moins une direction. Dans une forme préférée de réalisation l'accéléromètre 25 est un composant hybride microélectronique micro-mécanique de type « mems » permettant de mesurer l'accélération selon trois directions X, Y, Z formant une base orthogonale de l'espace. Ainsi l'accéléromètre 25 est adapté pour fournir trois mesures d'accélération, une selon chaque direction de mesure. De manière préférée l'accéléromètre 25 est monté sur la carte électronique qui porte les moyens de commande 6 de manière à réduire les coûts de fabrication. Le montage de l'accéléromètre 25 sera, en outre, de préférence réalisé pour qu'une fois implanté dans l'appareil électroménager selon l'invention, l'une des directions de mesure, par exemple la direction Z, soit parallèle à la direction de rotation $\Delta$ de l'outil 4. Ainsi les deux autres directions de mesure X, Y sont perpendiculaires à la direction de rotation $\Delta$ et se trouvent, selon l'exemple illustré, sensiblement horizontales. Par ailleurs, afin d'augmenter la sensibilité de la détection de l'apparition d'un balourd, l'accéléromètre 25 est de préférence éloigné de l'axe $\Delta$ de rotation de l'outil d'une distance supérieure au rayon de l'enveloppe de rotation de l'outil 4 et, de préférence, supérieure au rayon du récipient de travail.

Les moyens de détection 15 de balourd en association avec les moyens de commande 6 sont mis en oeuvre de la manière suivante lors de l'utilisation de l'appareil électroménager 1.

Lors de la mise en fonctionnement du moteur 5 électrique, les moyens de détection 15 sont placés dans un mode de détection de balourd. L'accéléromètre 25 calcule de manière périodique la valeur de l'accélération du châssis 2 pour chacune des directions X,Y,Z soit respectivement les valeurs ou composantes AX(t), AY(t), AZ(t) de l'accélération.

Les inventeurs ont eu le mérite de mettre en évidence que l'utilisation des seules valeurs de l'accélération selon les directions horizontales X,Y permet une détection fiable de l'apparition d'un balourd. En effet, les variations d'accélération selon l'axe Z peuvent être importantes bien que ne correspondant pas à l'apparition d'un balourd lors, par exemple, de l'utilisation de l'appareil électroménager pour découper des aliments, comme pour le râpage de carottes. Aussi, la non prise en considération des valeurs de l'accélération selon l'axe Z permet d'éviter les fausses détections. Par ailleurs, la mesure sur deux axes permet de tenir compte d'une éventuelle asymétrie de comportement du châssis en raison notamment d'une répartition inhomogène des masses.

Les moyens de détection 15 d'apparition d'un balourd calculent alors pour les deux composantes de l'accélération instantanée AXi(t), AYi(t), mesurée par l'accéléromètre 25, deux moyennes glissantes AXm(t) et AYm(t), sur les n dernières valeurs, de chaque composante de l'accélération instantanée. Les n dernières valeurs correspondent selon l'exemple illustré à un intervalle de temps glissant de l'ordre de 100 millisecondes.

Les moyens de détection 15 comparent alors, d'une part, la première moyenne AXm(t) à un premier seuil prédéterminé AXmax et, d'autre part, la deuxième moyenne AYm(t) à un deuxième seuil prédéterminé AYmax. Le premier seuil AXmax et le deuxième seuil AYmax pourront par exemple être chacun supérieur ou égal à 0,5g. Selon l'exemple illustré le deuxième seuil AYmax est en outre supérieur ou égal à deux fois le premier seuil. Dans le cas présent le premier seuil AXmax est choisi pour valoir 0,6g tandis que le deuxième seuil AYmax est choisi pour valoir 1,3g.

Lorsque la première moyenne AXm(t) est supérieure ou égale au premier seuil AXmax ou lorsque la deuxième moyenne AYm(t) est supérieure ou égale au deuxième seuil AYmax, les moyens de détection de balourd émettent un signal d'apparition de balourd.

Le signal d'apparition de balourd est alors traité par les moyens de commande.

Selon l'exemple illustré, la détection du balourd s'effectue également en fonction des modes de fonctionnement de l'appareil électroménager 1.

Ainsi, lorsque le moteur 5 fonctionne à sa vitesse maximale C ou à sa vitesse intermédiaire B et que les moyens de détection émettent à destination des moyens de commande 6 un signal d'apparition de balourd, les moyens de commande 6 réduisent de manière automatique la vitesse du moteur 5 pour le faire fonctionner à sa vitesse basse ou minimale A.

De la même manière, lorsque le moteur 5 fonctionne à sa vitesse basse A et que les moyens de détection 15 émettent à destination des moyens de commande 6 un signal d'apparition de balourd, les moyens de commande 6 stoppent le fonctionnement du moteur 5 électrique.

Selon la forme de réalisation illustrée, les moyens de commande 6 comprennent un organe de commande 26 qui est mobile entre une position de repos et une position active et qui est asservi en position de repos. L'organe de commande 26 forme ici un bouton poussoir qui, lorsqu'il est pressé, permet un fonctionnement de l'appareil 1 dans un mode généralement appelé «pulse» dans lequel le moteur 5 électrique délivre toute sa puissance. Les moyens de commande 6 sont alors adaptés pour, lorsque l'organe de commande 26 est en position active ou pressé, faire fonctionner le moteur sans tenir compte d'un éventuel signal d'apparition de balourd émis par les moyens de détection.

Selon l'exemple décrit précédemment, la détection de balourd est effectuée en prenant en compte l'accélération mesurée selon deux directions. Toutefois, la détection de l'apparition d'un balourd pourrait être effectuée en prenant en compte l'accélération mesurée selon une seule direction. De même, la détection de l'apparition d'un balourd pourrait être réalisée en prenant en considération les valeurs instantanées de l'accélération sans effectuer de moyennes glissantes.

Par ailleurs, selon l'exemple décrit précédemment, il est pris en considération des valeurs instantanées qui sont traitées pour chaque direction de mesures de manière indépendante. Toutefois selon l'invention la détection du balourd pourrait également être réalisée en mettant en oeuvre un paramètre d'accélération déterminé en fonction de la mesure de l'accélération selon une ou plusieurs directions. Ainsi, il pourrait être mis en oeuvre un paramètre d'accélération PA(t) correspondant à la somme des valeurs absolues des accélérations instantanées AX(t), AY(t), AZ(t).

$$PA(t) = Abs(AX(t)) + Abs(AY(t)) + Abs(AZ(t))$$

Dans ce cas les moyens de détection 15 de balourd seront adaptés pour émettre un signal d'apparition de balourd si PA (t) dépasse plus d'une fois une valeur prédéterminée sur un intervalle de temps glissant d'une durée prédéterminée. Ainsi les moyens de détection de balourd pourront, par exemple, émettre un signal d'apparition de balourd si le paramètre d'accélération PA(t) dépasse 2g au moins deux fois sur un intervalle de temps inférieur ou égal à une seconde.

Bien entendu, diverses autres modifications pourraient être apportées à l'appareil électroménager selon l'invention dans le cadre des revendications.

**Revendications**

1.  Appareil électroménager de préparation culinaire comprenant :

    - un châssis (2),
    - un récipient (3) de travail adapté sur le châssis (2),
    - un outil (4) de travail rotatif disposé dans le récipient (3) de travail,
    - un moteur (5) électrique solidaire du châssis (2) entraînant en rotation l'outil (4) de travail,
    - des moyens de commande (6) du moteur (5) électrique
    - des moyens de détection (15) de l'apparition d'un balourd au niveau de l'outil (4) de travail dans le récipient (3) de travail pendant le fonctionnement du moteur (5) électrique, les moyens de détection (15) étant adaptés pour émettre un signal en cas d'apparition d'un balourd,
    **caractérisé en ce que** les moyens de détection (15) de l'apparition d'un balourd comprennent au moins un accéléromètre (25) adapté pour mesurer une accélération du châssis (2) selon au moins une direction de mesure (X), et sont adaptés pour émettre un signal d'apparition de balourd en fonction de l'accélération mesurée.

2.  Appareil électroménager selon la revendication 1, **caractérisé en ce que** l'accéléromètre est adapté pour mesurer une accélération des mouvements du châssis selon au moins deux directions de mesure (X,Y).

3.  Appareil électroménager selon la revendication 2, **caractérisé en ce que** les moyens de détection sont adaptés pour calculer un paramètre d'accélération (PA) en fonction des valeurs de l'accélération dans certaines au moins des directions mesures (X,Y,Z) et pour émettre un signal d'apparition de balourd en fonction de la variation du paramètre d'accélération (PA).

4.  Appareil électroménager selon la revendication 3, **caractérisé en ce que** le paramètre d'accélération (PA(t)) correspond à la somme de la valeur absolue des mesures d'accélération selon au moins deux directions (X,Y).

5.  Appareil électroménager selon la revendication 2, caractérisé en que les moyens de détection (15) sont adaptés pour émettre un signal d'apparition de balourd au moins en fonction :

    - d'une première valeur (AX(t)) de l'accélération mesurée dans une direction (X),
    - et d'une deuxième valeur (AY(t)) de l'accélération mesurée dans une autre direction (Y).

6.  Appareil électroménager selon la revendication 5, **caractérisé en ce que** les directions de mesure (X,Y) sont orthogonales à la direction (Δ) de rotation de l'outil (4) de travail.

7.  Appareil électroménager selon la revendication 5 ou 6, **caractérisé en ce que** les moyens de détection (15) de l'apparition d'un balourd sont adaptés pour :

    - calculer une première moyenne (AXm(t)) sur un intervalle de temps glissant de la valeur de l'accélération (AX(t)) mesurée selon une direction (X),
    - calculer une deuxième moyenne (AYm(t)) sur un intervalle de temps glissant de la valeur de l'accélération (AY(t)) mesurée selon une autre direction (Y),
    - et pour émettre un signal d'apparition de balourd lorsque la première moyenne (AXm(t)) est supérieure à un premier seuil prédéterminé (AXmax) et/ou lorsque la deuxième moyenne (AYm(t)) est supérieure à un deuxième seuil prédéterminé (AYmax).

8.  Appareil électroménager selon la revendication 7, **caractérisé en ce que** les premier ((AXmax) et deuxième (AYmax) seuils prédéterminés sont chacun supérieur ou égal à 0,5 g.

9.  Appareil électroménager selon la revendication 8, **caractérisé en ce que** l'un des seuil prédéterminé (AYmax) est supérieur ou égal à deux fois l'autre seuil prédéterminé (AXmax).

10. Appareil électroménager selon l'une quelconque des revendications précédentes, **caractérisé en ce que** les moyens de détection (15) sont reliés aux moyens de commande (6) qui sont adaptés pour modifier le mode de fonctionnement du moteur (5) électrique en fonction du signal émis par les moyens de détection (15).

11. Appareil électroménager selon l'une quelconque des revendications précédentes, **caractérisé en ce que** les moyens de commande (6) sont adaptés pour permettre une sélection d'au moins deux vitesses (A,B) ou modes de fonctionnement du moteur et **en ce que** les moyens de détection (15) sont adaptés pour émettre un signal d'apparition de balourd en fonction de la vitesse ou du mode de fonctionnement sélectionné.

12. Appareil électroménager selon la revendication 10 ou 11, **caractérisé en ce que** les moyens de commande (6) sont adaptés pour :

- permettre la sélection d'au moins deux vitesses (A,B) de fonctionnement du moteur dont la plus faible est dite vitesse basse (A),
- lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

13. Appareil électroménager selon la revendication 10 ou 11, **caractérisé en ce que** les moyens de commande (6) sont adaptés pour interrompre le fonctionnement du moteur lors de la réception d'un signal d'apparition de balourd.

14. Appareil électroménager selon l'une des revendications 10 à 13, **caractérisé en ce qu'**il comprend un organe de commande (26) qui est mobile entre une position de repos et une position active et qui est asservi en position de repos, et **en ce que** les moyens de commande (6) sont adaptés pour, lorsque l'organe de commande (26) est en position active, faire fonctionner le moteur sans tenir compte d'un éventuel signal d'apparition de balourd et/ou en neutralisant les moyens de détection (15).

15. Appareil électroménager selon l'une des revendications 10 à 14, **caractérisé en ce qu'**il comprend des moyens de neutralisation des moyens de détection.

**Patentansprüche**

1. Elektrohaushaltsgerät zur Zubereitung von Nahrungsmitteln, das Folgendes umfasst:

- ein Gestell (2),
- einen Arbeitsbehälter (3), der auf das Gestell (2) aufgesetzt ist,
- ein rotierendes Arbeitswerkzeug (4), das in dem Arbeitsbehälter (3) angeordnet ist,
- einen Elektromotor (5), der mit dem Gestell (2) fest verbunden ist und das Arbeitswerkzeug (4) in Drehbewegung versetzt,
- Mittel zur Steuerung (6) des Elektromotors (5),
- Mittel zur Erkennung (15) des Auftretens einer Unwucht am Arbeitswerkzeug (4) in dem Arbeitsbehälter (3) während des Betriebs des Elektromotors (5), wobei die Erkennungsmittel (15) für die Ausgabe eines Signals im Falle des Auftretens einer Unwucht ausgelegt sind, **dadurch gekennzeichnet, dass** die Mittel zur Erkennung (15) des Auftretens einer Unwucht zumindest einen Beschleunigungssensor (25) umfassen, der für die Messung einer Beschleunigung des Gestells (2) in zumindest einer Messrichtung (X) ausgelegt ist, und in Abhängigkeit von der gemessenen Beschleunigung für die Ausgabe eines Signals im Falle des Auftretens einer Unwucht ausgelegt sind.

2. Elektrohaushaltsgerät nach Anspruch 1, **dadurch gekennzeichnet, dass** der Beschleunigungssensor für die Messung einer Beschleunigung der Bewegungen des Gestells in zumindest zwei Messrichtungen (X, Y) ausgelegt ist.

3. Elektrohaushaltsgerät nach Anspruch 2, **dadurch gekennzeichnet, dass** die Erkennungsmittel für die Berechnung eines Beschleunigungsparameters (PA) in Abhängigkeit von den Werten der Beschleunigung zumindest in einigen Messrichtungen (X, Y, Z) und für die Ausgabe eines Signals im Falle des Auftretens einer Unwucht in Abhängigkeit von der Änderung des Beschleunigungsparameters (PA) ausgelegt sind.

4. Elektrohaushaltsgerät nach Anspruch 3, **dadurch gekennzeichnet, dass** der Beschleunigungsparameter (PA(t)) der Summe der absoluten Beschleunigungsmesswerte in zumindest zwei Richtungen (X, Y) entspricht.

5. Elektrohaushaltsgerät nach Anspruch 2, **dadurch gekennzeichnet, dass** die Erkennungsmittel (15) dafür ausgelegt sind, ein Signal im Falle des Auftretens einer Unwucht zumindest in Abhängigkeit von folgenden Werten auszugeben:

- einem ersten Wert (AX(t)) der in einer Richtung (X) gemessenen Beschleunigung
- und einem zweiten Wert (AY(t)) der in einer weiteren Richtung (Y) gemessenen Beschleunigung.

6. Elektrohaushaltsgerät nach Anspruch 5, **dadurch gekennzeichnet, dass** die Messrichtungen (X, Y) rechtwinklig zur Drehrichtung (Δ) des Arbeitswerkzeugs (4) stehen.

7. Elektrohaushaltsgerät nach Anspruch 5 oder 6, **dadurch gekennzeichnet, dass** die Mittel zur Erkennung (15) des Auftretens einer Unwucht ausgelegt sind für:

- die Berechnung eines ersten Mittelwertes (AXm(t)) über ein gleitendes Zeitintervall des Wertes der in einer Richtung (X) gemessenen Beschleunigung (AX(t)),
- die Berechnung eines zweiten Mittelwertes (AYm(t)) über ein gleitendes Zeitintervall des Wertes der in einer weiteren Richtung (Y) gemessenen Beschleunigung (AY(t))
- und die Ausgabe eines Signals im Falle des Auftretens einer Unwucht, wenn der erste Mittelwert (AXm(t)) einen vorbestimmten ersten Schwellenwert (AXmax) überschreitet und/oder wenn der zweite Mittelwert (AYm(t)) einen vorbestimmten zweiten Schwellenwert (AYmax) überschreitet.

8. Elektrohaushaltsgerät nach Anspruch 7, **dadurch gekennzeichnet, dass** der vorbestimmte erste (AXmax) und der vorbestimmte zweite Schwellenwert (AYmax) jeweils mindestens 0,5 g betragen.

9. Elektrohaushaltsgerät nach Anspruch 8, **dadurch gekennzeichnet, dass** einer der vorbestimmten Schwellenwerte (AYmax) mindestens doppelt so hoch wie der andere vorbestimmte Schwellenwert (AXmax) ist.

10. Elektrohaushaltsgerät nach einem der vorhergehenden Ansprüche, **dadurch gekennzeichnet, dass** die Erkennungsmittel (15) mit den Steuerungsmitteln (6) verbunden sind, die für die Änderung der Betriebsart des Elektromotors (5) in Abhängigkeit von dem von den Erkennungsmitteln (15) ausgegebenen Signal ausgelegt sind.

11. Elektrohaushaltsgerät nach einem der vorhergehenden Ansprüche, **dadurch gekennzeichnet, dass** die Steuerungsmittel (6) dafür ausgelegt sind, die Wahl von zumindest zwei Drehzahlen (A, B) oder Betriebsarten des Motors zu ermöglichen, und dass die Erkennungsmittel (15) für die Ausgabe eines Signals im Falle des Auftretens einer Unwucht in Abhängigkeit von der Drehzahl oder der gewählten Betriebsart ausgelegt sind.

12. Elektrohaushaltsgerät nach Anspruch 10 oder 11, **dadurch gekennzeichnet, dass** die Steuerungsmittel (6) dafür ausgelegt sind:

- um die Wahl von zumindest zwei Betriebsdrehzahlen (A, B) des Motors zu ermöglichen, von denen die geringere als niedrige Drehzahl (A) bezeichnet wird,
- um bei Empfang eines Signals im Falle des Auftretens einer Unwucht entweder den Betrieb des Motors mit einer geringeren Drehzahl als seiner vor dem Signal gewählten Betriebsdrehzahl fortzuführen, falls er mit einer Drehzahl betrieben wurde, die höher als die niedrige Drehzahl war, oder den Betrieb des Motors zu unterbrechen, wenn dieser mit der niedrigen Drehzahl betrieben wurde.

13. Elektrohaushaltsgerät nach Anspruch 10 oder 11, **dadurch gekennzeichnet, dass** die Steuerungsmittel (6) für die Unterbrechung des Betriebs des Motors bei Empfang eines Signals im Falle des Auftretens einer Unwucht ausgelegt sind.

14. Elektrohaushaltsgerät nach einem der Ansprüche 10 bis 13, **dadurch gekennzeichnet, dass** es ein Bedienelement (26) umfasst, das zwischen einer Ruhestellung und einer aktiven Stellung beweglich ist und in Ruhestellung geregelt wird, und dass die Steuerungsmittel (6) dafür ausgelegt sind, wenn sich das Bedienelement (26) in seiner aktiven Stellung befindet, den Betrieb des Motors fortzuführen, ohne ein eventuelles Signal für das Auftreten einer Unwucht zu berücksichtigen und/oder indem sie die Erkennungsmittel (15) außer Betrieb setzen.

15. Elektrohaushaltsgerät nach einem der Ansprüche 10 bis 14, **dadurch gekennzeichnet, dass** es Mittel zur Außerbetriebsetzung der Erkennungsmittel umfasst.

**Claims**

1. Electrical household food preparation appliance comprising:

   - a frame (2),
   - a working receptacle (3) adapted on the frame (2),
   - a rotary working tool (4) arranged in the working receptacle (3),
   - an electric motor (5) fastened to the frame (2) rotating the working tool (4),
   - means (6) for controlling the electric motor (5),
   - means (15) for detecting the appearance of an unbalance of the working tool (4) in the working receptacle (3) while the electric motor (5) is running, the detection means being adapted to emit a signal if an unbalance appears, **characterised in that** the means (15) for detecting the appearance of an unbalance comprise at least one accelerometer (25) adapted to measure an acceleration of the frame (2) in at least one measurement direction (X) and are adapted to emit a signal indicating appearance of an unbalance depending on the acceleration measured.

2. Electrical household appliance according to claim 1, **characterised in that** the accelerometer is adapted to measure an acceleration of the frame movements in at least two measurement directions (X, Y).

3. Electrical household appliance according to claim 2, **characterised in that** the detection means are adapted to calculate an acceleration parameter (PA) according to the accelerations in at least some of the measurement directions (X, Y, Z) and to emit a signal indicating the appearance of an unbalance depending on the variation in the acceleration parameter (PA).

4. Electrical household appliance according to claim 3, **characterised in that** the acceleration parameter (PA(t)) corresponds to the sum of the absolute values of the acceleration measurements in at least two directions (X, Y).

5. Electrical household appliance according to claim 2, **characterised in that** the detection means (15) are adapted to emit a signal indicating the appearance of an unbalance at least according to:

   - a first value (AX(t)) of the acceleration measured in a direction (X),
   - and a second value (AY(t)) of the acceleration measured in another direction (Y).

6. Electrical household appliance according to claim 5, **characterised in that** the measurement directions (X, Y) are perpendicular to the direction of rotation (Δ) of the working tool (4).

7. Electrical household appliance according to claim 5 or 6, **characterised in that** the means (15) for detecting the appearance of an unbalance are adapted to:

   - calculate a first mean (AXm(t)) over a sliding time interval of the acceleration (AX(t)) measured in a direction (X),
   - calculate a second mean (AYm(t)) over a sliding time interval of the acceleration (AY(t)) measured in another direction (Y),
   - and to emit a signal indicating the appearance of an unbalance when the first mean (AXm(t)) is greater than a first predetermined threshold (AXmax) and/or when the second mean (AYm(t)) is greater than a second predetermined threshold (AYmax).

8. Electrical household appliance according to claim 7, **characterised in that** the first (AXmax) and second (AYmax) predetermined thresholds are each greater than or equal to 0.5g.

9. Electrical household appliance according to claim 8, **characterised in that** one of the predetermined thresholds (AYmax) is greater than or equal to double the other predetermined threshold (AXmax).

10. Electrical household appliance according to any of the preceding claims, **characterised in that** the detection means (15) are connected to the control means (6) which are adapted to modify the operating mode of the electric motor (5) according to the signal emitted by the detection means (15).

11. Electrical household appliance according to any of the preceding claims, **characterised in that** the control means (6) are adapted to allow selection of at least two speeds (A, B) or operating modes of the motor, and **in that** the detection means (15) are adapted to emit a signal indicating the appearance of an unbalance according to the speed or operating mode selected.

12. Electrical household appliance according to claim 10 or 11, **characterised in that** the control means (6) are adapted to:

    - allow selection of at least two motor operating speeds (A, B), for which the lower is called low speed (A),
    - on receiving a signal indicating the appearance of an unbalance: either run the motor at a speed less than its operating speed before the signal if it was running at a speed greater than low speed, or stop the motor if it was operating at low speed.

13. Electrical household appliance according to claim 10 or 11, **characterised in that** the control means (6) are adapted to stop the motor upon receiving a signal indicating the appearance of an unbalance.

14. Electrical household appliance according to one of claims 10 to 13, **characterised in that** it comprises a control member (26) which is movable between a rest position and an active position and which is controlled in rest position, and **in that** that the control means (6) are adapted to, when the control member (26) is in active position, run the motor without taking into account a possible signal indicating the appearance of an unbalance and/or by neutralising the detection means (15).

15. Electrical household appliance according to one of claims 10 to 14, **characterised in that** it comprises means for neutralising the detection means.

**FIG.1**

**EP 2 484 253 B1**

**Documents brevets cités dans la description**

- EP 1650850 A